# EUROPÄISCHE PATENTSCHRIFT

(11) **EP 1 911 580 B1**
(45) Veröffentlichungstag und Bekanntmachung des Hinweises auf die Patenterteilung: **11.04.2012**
(21) Anmeldenummer: 07018518.6
(22) Anmeldetag: 20.09.2007
(51) Int. Cl.: B32B 38/12, B32B 37/02, B29C 45/14

(54) **Verfahren zur Herstellung von Bauteilen mit Furnier-Folien-Verbund**
Method for manufacturing parts with veneer-film laminate
Procédé de fabrication de composants dotés d'une composition de films et de bois de placage

(30) Priorität: 10.10.2006 DE 102006047950
(43) Veröffentlichungstag der Anmeldung: 16.04.2008
(73) Patentinhaber: Lisa Dräxlmaier GmbH, 84137 Vilsbiburg (DE)
(72) Erfinder: Müller, Henry, Dr., 84169 Altfraunhofen (DE)
(74) Vertreter: HOFFMANN EITLE

(56) Entgegenhaltungen:
- WO-A-99/64241
- FR-A- 2 760 208
- FR-A- 2 868 733
- US-A- 5 938 881

## Beschreibung

### Gebiet der Erfindung

Die vorliegende Erfindung bezieht sich auf ein Verfahren zur Herstellung von Bauteilen mit Dekor- und Deckschicht, insbesondere eines dekorativen Zierteils zur Verwendung in Kraftfahrzeugen.

### Stand der Technik

Bauteile in Echtholzfurnier-Optik, insbesondere solche, die in Kraftfahrzeugen als Zierteile eingebaut werden, jedochauch solche im Yachtbau oder in anderen Bereichen, in denen die dekorative Verkleidung von Innenräumen mithilfe derartiger Bauteile erfolgen kann, bestehen gewöhnlich von innen nach außen aus einem Träger, einem Furnierschichtaufbau und einer transparenten Schicht aus Lack oder einem Kunststofffilm. Der Träger ist häufig ein Druckgussteil oder besteht aus einem harten Kunststoff und ist entsprechend der Einbaustelle im Fahrzeug geformt sowie wahlweise mit Ausnehmungen für Schalter und ähnliches versehen. Die Furnierschicht ist zumeist ein ein- oder mehrschichtiges Holz- oder Edelholzfurnier, das auf die Oberseite des Trägers, die der Einbaustelle abgewandt ist, aufgebracht wird. Die transparente Schicht dient einerseits dazu, durch Erzeugen einer Tiefenwirkung und einer zumeist glänzenden Oberfläche die optische Attraktivität der Furnierschicht zu erhöhen, und andererseits die Furnierschicht vor Beschädigung und Umwelteinflüssen zu schützen.

Zwar werden die genannten Bauteile durch vielerlei Verfahren hergestellt, jedoch ist allen bisherigen Verfahren gemeinsam, dass zunächst die Kombination aus Träger und Furnierschicht hergestellt wird und anschließend die Sichtseite der Furnierschicht mit der transparenten Schicht beschichtet wird. Hierzu werden ein geeigneter Träger mit einem Furnieraufbau zum Beispiel aus Edelholzfurnier, Blindfurnieren und gegebenenfalls Metallfolien sowie Klebefilmen zunächst verpresst, wahlweise durch Schleifen, Kitten, Fräsen, Farbgebung usw. nachbearbeitet und schließlich lackiert (z.B. mit UPE-Lack) oder zum Beispiel im RIM-Verfahren mit einer dünnen PU-Schicht beschichtet. Nach dem Lackieren bzw. Beschichten wird zusätzlich noch abschließend geschliffen und poliert.

Ein Beispiel für das Vereinen von Träger und Furnierschicht mit nachfolgendem Lackieren ist in der DE 198 18 232 A1 beschrieben, wobei ein Phenolfilm als Haftvermittler zwischen Träger und Furnier eingelegt und ausgehärtet wird. Auf diese Kombination wird dann ein Lack aufgebracht. In der EP 1 360 089 B1 ist ein aus Träger und Furnier bestehendes Basisteil bereits vorgefertigt und wird lediglich mit einer Kunststofffolie z.B. aus Polycarbonat überzogen, wobei die eigentliche Verbindung von Folie und Träger durch Zwischenpressen eines Klebers bewirkt wird. In der DE 199 57 850 A1 hingegen wird eine Bezugsschicht dreidimensional auf den Träger aufgeformt, indem diese in einem Formbehälter durch den isostatischen Druck einer Flüssigkeit beaufschlagt wird und so mit dem Träger verpresst wird.

In alternativen Verfahren wird zunächst der Furnieraufbau hergestellt und vorgeformt, und dann wird dieser vorgeformte Furnieraufbau in ein Spritzgusswerkzeug eingelegt und mit einem geeigneten SG-Werkstoff hinterspritzt. Abschließend wird wie zuvor ein Lack oder Film auf die Träger/Furnier-Kombination aufgebracht.

Nachteile dieser Verfahren sind der damit verbundene hohe Aufwand, und die dementsprechend hohen Kosten. Außerdem werden bei den bekannten Verfahren die auf einen Träger aufzubringende bzw. aufgebrachte Furnierschicht bei der zur Anpassung an den Einbauraum notwendigen Verformung stark auf Zug beansprucht, was zu einer vermehrten Rissbildung in der Furnierschicht führt, die wiederum eine hohe Quote an Fehlteilen zur Folge hat. Diese Rissbildung wirkt sich zudem negativ auf eine der Verbindung mit dem Träger vorgeschaltete Oberflächenbearbeitung des Furniers aus, so dass die bei diesen Bauteilen traditionell hohen Qualitätsanforderungen nicht erfüllt werden können.

Die FR 2 868 733 beschreibt ein Verfahren zur Herstellung einer Verbundschicht aus einem Furnier und einer oberen und unteren Deckschicht aus Polyethylen oder Polypropylen.

Deckschichten aus PC und PMMA sind aus der FR 2 760 208 A bekannt.

### Darstellung der Erfindung

Es ist somit Aufgabe der vorliegenden Erfindung, ein Verfahren zur Herstellung von Bauteilen mit Dekor- und Deckschicht zu entwickeln, das die genannten Nachteile überwindet und somit auf einfache und kostengünstige Weise durchführbar ist, ohne Abstriche bei der Qualität der Oberfläche der fertigen Bauteile hinnehmen zu müssen.

Diese Aufgabe wird durch ein Verfahren mit den Merkmalen des Anspruchs 1 gelöst. Weitere vorteilhafte Ausgestaltungen ergeben sich aus den abhängigen Ansprüchen.

Das erfindungsgemäße Verfahren zur Herstellung eines Bauteils mit Dekor- und Deckschicht umfasst (a) das Erzeugen eines Verbunds aus Dekorschicht und Deckschicht durch Verpressen mithilfe eines transporenten und lichtechten Klebstoffs, wobei die Dekorschicht ein Furnier oder ein aus mehreren Furnieren sowie Leimfilmen und Metallfolien bestehender Furnieraufbau ist, oder Gewebe, Gewirke und/oder Vliesstoffe aus Textil, Metall oder Kunststoffen umfasst, und die Deckschicht eine PC-, PMMA-oder PC-PMMA-Kombinationsfolie ist, wobei der Klebstoff ein Phenol, PUR, Melamin oder eine Harnstoff- Melamin Verbindung ist, (b) unabhängig vom Schritt (a) das Bereitstellen eines Trägers, (c) Verformen des Verbunds aus Dekorschicht und Deckschicht, und (d) das Verbinden des Trägers mit dem Verbund aus Dekorschicht und Deckschicht. Sowohl der Verbund als auch dessen Verbindung mit dem Träger können zum Beispiel durch Verpressen erzeugt werden, wahlweise unter thermischer Beaufschlagung.

Das erfindungsgemäße Verfahren bringt den Vorteil mit sich, dass die Dekorschicht, da sie nicht zuerst auf den Träger aufgebracht wird, in einem sehr frühen Stadium endbehandelt werden kann, wenn sie noch in Bahnen bzw. großen Stücken vorliegt. Auch muss die Deckschicht noch nicht vorgeformt sein. Somit können Vorgänge wie der Klebstoffauftrag oder weitere Behandlungsmaßnahmen wie Bedruckung der Dekorschicht und/oder der Deckschicht im Vergleich zu herkömmlichen Verfahren deutlich kostengünstiger realisiert werden. Gleichzeitig ermöglicht die Erzeugung des Verbunds aus Dekor- und Deckschicht, dass bei dessen Verformung die mit.der Deckschicht verbundene Dekorschicht von der Deckschicht "zusammengehalten" wird und in den später sichtbaren Radienbereichen des Bauteils gestaucht, das heißt auf Druck beansprucht wird, ohne dass sichtbare Risse entstehen. Durch die angegebene Wahl der Materialien der Dekorschicht wird eine optisch besonders ansprechende Dekorschicht erzielt, während sich die bezüglich der Deckschicht genannte Art von Folien durch ihre hohe Beständigkeit sowie die Fähigkeit auszeichnen, Filme hoher Oberflächengüte zu bilden.

Wie erwähnt wird der Verbund aus Dekor- und Deckschicht erzeugt, indem die Dekorschicht und die Deckschicht mithilfe eines Klebstoffs verpresst werden, der transparent und lichtecht ist, um die Sicht auf das Dekor nicht zu beeinträchtigen und unter Lichteinwirkung, die besonders in Kraftfahrzeugen aufgrund Aussetzung an starke Sonneneinstrahlung relevant ist, nicht vergilben oder altern.

Dabei ist bevorzugt vorgesehen, dass der Verbund aus Dekorschicht und Deckschicht mithilfe eines Klebstoffs auf den Träger kaschiert wird.

Zwischen Dekorschicht und Träger, kann der Klebstoff ein aushärtendes Harz, z.B. Phenol, PUR, Melamin oder Harnstoff-Melamin-Verbindungen sein. Die dauerhafte Aushärtung gewährleistet eine sichere Verbindung und erhöht zudem die Stabilität des Bauteils.

In einer Ausführungsform kann der Träger vorgefertigt sein. Er kann zum Beispiel durch Spritzgießen oder auf andere, dem Fachmann bekannte Weisen aus Kunststoff, bevorzugt Polyamid, PET oder Polypropylensulfid, hergestellt werden. Auch durch Druckguss hergestellte metallische Träger, z.B. aus Aluminium, sind möglich.

Der Verbund aus Dekorschicht und Deckschicht wird vorteilhafter Weise vor dem Verbinden mit dem Träger zugeschnitten. Dadurch wird das Aufbringen auf den Träger wesentlich einfacher gestaltet.

Vorteilhafter Weise ist die Deckschicht transparent oder transluzent (durchscheinend). Eine transparente Deckschicht, insbesondere jene aus PC, PMMA oder deren Kombination, gewährleistet die hohe Sichtbarkeit der darunter liegenden Dekorschicht, während eine durchscheinende Deckschicht bei geeigneter Wahl des Dekors ebenfalls ansprechende optische Effekte erzielt.

Bevorzugt weist die Deckschicht eine Dicke von 0,015 bis 2 mm, besonders bevorzugt eine Dicke von 0,025 bis 1 mm auf. Durch diese im Vergleich zu bisherigen Deckschichten verminderte Dicke der Deckschicht wird eine größere Gestaltungsfreiheit bei der Wahl der vom fertigen Bauteil zu befolgenden Biegeradien geschaffen, da bei der Verformung des Verbunds kleinere Radien möglich sind.

Es ist insbesondere bevorzugt, wenn die Dekorschicht vor Verbindung mit der Deckschicht einer Farbgebung unterzogen wird und/oder geschliffen, gekittet und poliert wird. Somit können die optischen Gestaltungsmerkmale des Verbunds festgelegt werden, bevor dieser aufgrund des Verbindens die Form des Trägers annimmt.

In einer bevorzugten Ausführungsform wird die Deckschicht vor Erzeugen des Verbunds vorder- und/oder rückseitig teilweise oder ganz bedruckt. Auf diese Weise können insbesondere bei rückseitigem Bedrucken besonders resistente Beschriftungen auf dem Bauteil angebracht werden, die geeigneter Weise in der Nähe von Aussparungen für Schalter oder ähnliches platziert werden.

Ebenso wird vorteilhafter Weise die Dekorschicht vor Erzeugen des Verbunds sichtseitig bedruckt. Auf diese Weise können aufgrund des im fertigen Bauteil innen, also nicht exponiert liegenden Drucks, ebenfalls besonders widerstandfähige Beschriftungen oder Symbole aufgebracht werden.

In einer vorteilhaften Ausgestaltung wird die Dekorschicht vor Erzeugen des Verbunds sichtseitig mit Intarsien versehen. Diese bleiben dann im fertigen Bauteil innen liegend zwischen Dekor- und Deckschicht und können somit nicht verschmutzen, abnutzen usw., so dass eine dauerhafte Verzierung gewährleistet wird.

Es ist außerdem vorteilhaft, dass die Deckschicht auf der äußeren Seite mit einer Kratzfestschicht oder einer Easy-to-Clean-Schicht beschichtet wird. Im ersten Fall können damit besonders gegen starke Beanspruchung resistente dekorative Bauteile hergestellt werden, die zum Beispiel bei oft angefassten oder als Ablage dienenden Dekorbereichen in Kraftfahrzeugen eingesetzt werden können, während im zweiten Fall ein für besonders schmutzbelastete Umgebungen geeignetes Bauteil geschaffen wird.

Die Dekorschicht wird in einer anderen bevorzugten Ausführungsform vor Verbinden mit der Deckschicht rückseitig mit einem Vlies beschichtet.

Es ist auch vorteilhaft, wenn die Dekorschicht vor Erzeugung des Verbunds aus Dekorschicht und Deckschicht partiell gelasert wird. Ein Materialabtrag bzw. die Bildung eines Ausschnittes mit einem Laser ermöglicht es, optisch attraktive Beleuchtungseffekte bei der Betrachtung des Bauteils hervorzurufen, indem zum Beispiel hinter der Dekorschicht eine Beleuchtung vorgesehen wird. Alternativ kann ein Laser auch zur bereichsweisen Änderung der Farbgebung des Bauteils verwendet werden, um z.B. Muster oder Beschriftungen auf der Dekoroberfläche zu bilden.

### Wege zur Ausführung der Erfindung

Nachfolgend wird die Erfindung anhand einer Ausführungsform näher erläutert.

Zunächst ein Holzfurnieraufbau bestehend aus mehreren Furnierschichten sowie zwischengelegten Leimschichten hergestellt und auf der Sichtseite mit Intarsien versehen. Der Furnieraufbau wird dann auf der Sichtseite mit einem thermisch aushärtenden Phenolharz beschichtet, z.B. durch Räkeln, und mit einer Polycarbonatfolie überzogen. Zum Aushärten des transparenten PC-Harzes wird der Furnier-Folien-Verbund mit Wärme behandelt und verpresst. Dieser Verbund wird anschließend entsprechend seiner endgültigen Form vorgeformt und zugeschnitten.

Nach Vorformen des Trägers und dem getrennt hierzu durchgeführten Erzeugen des Furnier-Folien-Verbunds werden diese Komponenten mithilfe eines Klebstoffs, z.B. wieder eines thermisch aushärtenden Harzes, das aber hier nicht transparent sein muss, verbunden und zum Bauteil verpresst.

## Patentansprüche

1. Verfahren zur Herstellung eines Bauteils mit Dekor- und Deckschicht, umfassend die Schritte:
(a) Das Erzeugen eines Verbunds aus Dekorschicht und Deckschicht durch Verpressen mithilfe eines transparenten und lichtechten Klebstoffs, wobei die Dekorschicht ein Furnier oder ein aus mehreren Furnieren sowie Leimfilmen und Metallfolien bestehender Furnieraufbau ist, oder Gewebe, Gewirke und/oder Vliesstoffe aus Textil, Metall oder Kunststoffen umfasst, die Deckschicht eine PC-, PMMA- oder PC-PMMA-Kombinationsfolie ist, und der Klebstoff ein Phenol, PUR, Melamin oder eine Harnstoff-Melamin-Verbindung ist;
(b) unabhängig vom Schritt (a) Bereitstellen eines Trägers;
(c) Verformen des Verbunds aus Dekorschicht und Deckschicht, und
(d) Verbinden des Trägers mit dem Verbund aus Dekorschicht und Deckschicht.

2. Verfahren nach Anspruch 1, wobei der Verbund aus Dekorschicht und Deckschicht mithilfe eines Klebstoffs auf den Träger kaschiert wird.

3. Verfahren nach Anspruch 1 oder 2, wobei der Träger vorgefertigt ist.

4. Verfahren nach Anspruch 3, wobei der Verbund aus Dekorschicht und Deckschicht vor dem Verbinden mit dem Träger zugeschnitten wird.

5. Verfahren nach einem der vorangehenden Ansprüche, wobei die Deckschicht eine Dicke von 0,015 bis 2 mm aufweist.

6. Verfahren nach Anspruch 5, wobei die Deckschicht eine Dicke von 0,025 bis 1 mm aufweist.

7. Verfahren nach einem der vorangehenden Ansprüche, wobei die Deckschicht transparent oder transluzent ist.

8. Verfahren nach einem der vorangehenden Ansprüche, wobei die Dekorschicht vor Verbindung mit der Deckschicht einer Farbgebung unterzogen wird und/oder geschliffen, gekittet und poliert wird.

9. Verfahren nach einem der vorangehenden Ansprüche, wobei die Deckschicht vor Erzeugen des Verbunds vorder- und/oder rückseitig teilweise oder ganz bedruckt wird.

10. Verfahren nach einem der vorangehenden Ansprüche, wobei die Dekorschicht vor Erzeugen des Verbunds sichtseitig bedruckt wird.

11. Verfahren nach einem der vorangehenden Ansprüche, wobei die Dekorschicht vor Erzeugen des Verbunds sichtseitig mit Intarsien versehen wird.

12. Verfahren nach einem der vorangehenden Ansprüche, wobei die Deckschicht auf der äußeren Seite mit einer Kratzfestschicht oder einer Easy-to-Clean-Schicht beschichtet wird.

13. Verfahren nach einem der vorangehenden Ansprüche, wobei die Dekorschicht vor Verbinden mit der Deckschicht rückseitig mit einem Vlies beschichtet wird.

14. Verfahren nach einem der vorangehenden Ansprüche, wobei die Dekorschicht vor Erzeugung des Verbunds aus Dekorschicht und Deckschicht partiell gelasert wird.

## Claims

1. Method for producing a component having decorative layer and cover layer, comprising the steps:
(a) producing a composite comprising decorative layer and cover layer by moulding with the aid of a transparent and light-fast adhesive, wherein the decorative layer is a veneer or a veneer structure consisting of several veneers and film glues and metal foils, or comprises fabric, knitted fabric and/or non-wovens made from textile, metal or plastics, the cover layer is a PC film, PMMA film or PC-PMMA combination film, and the adhesive is a phenol, PUR, melamine or a urea-melamine combination;
(b) independently of step (a), providing a support;
(c) shaping the composite comprising decorative layer and cover layer, and
(d) joining the support to the composite comprising decorative layer and cover layer.

2. Method according to claim 1, wherein the composite comprising decorative layer and cover layer is laminated to the support with the aid of an adhesive.

3. Method according to claim 1 or 2, wherein the support is pre-manufactured.

4. Method according to claim 3, wherein the composite comprising decorative layer and cover layer is cut to size before joining to the support.

5. Method according to one of the preceding claims, wherein the cover layer has a thickness of 0.015 to 2 mm.

6. Method according to claim 5, wherein the cover layer has a thickness of 0.025 to 1 mm.

7. Method according to one of the preceding claims, wherein the cover layer is transparent or translucent.

8. Method according to one of the preceding claims, wherein the decorative layer is subjected to colouring before joining to the cover layer and/or is smoothed, cemented and polished.

9. Method according to one of the preceding claims, wherein the cover layer is printed partly or completely on the front side and/or rear side before producing the composite.

10. Method according to one of the preceding claims, wherein the decorative layer is printed on the visible side before producing the composite.

11. Method according to one of the preceding claims, wherein the decorative layer is provided with inlays on the visible side before producing the composite.

12. Method according to one of the preceding claims, wherein the cover layer is coated on the outer side with a scratch-resistant layer or an easy-to-clean layer.

13. Method according to one of the preceding claims, wherein the decorative layer is coated with a fibrous web on the rear side before joining to the cover layer.

14. Method according to one of the preceding claims, wherein the decorative layer is partly lasered before producing the composite comprising decorative layer and cover layer.

## Revendications

1. Procédé de fabrication d'un composant avec une couche décorative et une couche de couverture, comprenant les étapes de :
(a) production d'un composite de la couche décorative et de la couche de couverture, sous pression au moyen d'un adhésif transparent et stable à la lumière, où la couche décorative est une feuille de placage ou une structure de placage composée de plusieurs feuilles de placage et de films de colle et de feuilles métalliques, ou comprend un tissu, une étoffe à mailles et/ou des voiles non tissés en textile, en métal ou en matières synthétiques, la couche de couverture étant une feuille de PC, de PMMA ou une feuille combinée PC-PMMA, et l'adhésif un phénol, du PUR, de la mélamine ou un composé mélamine/urée ;
(b) indépendamment de l'étape (a), préparation d'un support ;
(c) déformation du composite de la couche décorative et de la couche de couverture, et
(d) liaison du support avec le composite de la couche décorative et de la couche de couverture.

2. Procédé selon la revendication 1, où le composite de la couche décorative et de la couche de couverture est contrecollé sur le support au moyen d'un adhésif.

3. Procédé selon la revendication 1 ou la revendication 2, où le support est préfabriqué.

4. Procédé selon la revendication 3, où le composite de la couche décorative et de la couche de couverture est découpé avant liaison avec le support.

5. Procédé selon l'une des revendications précédentes, où la couche de couverture a une épaisseur comprise entre 0,015 et 2 mm.

6. Procédé selon la revendication 5, où la couche de couverture a une épaisseur comprise entre 0,025 et 1 mm.

7. Procédé selon l'une des revendications précédentes, où la couche de couverture est transparente ou translucide.

8. Procédé selon l'une des revendications précédentes, où, avant liaison avec la couche de couverture, la couche décorative est soumise à un processus de coloration et/ou poncée, mastiquée et polie.

9. Procédé selon l'une des revendications précédentes, où la couche de couverture est partiellement ou totalement imprimée sur sa face avant et/ou sa face arrière avant la réalisation du composite.

10. Procédé selon l'une des revendications précédentes, où la couche décorative est imprimée sur sa face visible avant la réalisation du composite.

11. Procédé selon l'une des revendications précédentes, où la couche décorative est marquetée sur sa face visible avant la réalisation du composite.

12. Procédé selon l'une des revendications précédentes, où la couche de couverture est revêtue d'une couche résistante aux rayures ou d'une couche « easy to clean » sur sa face extérieure.

13. Procédé selon l'une des revendications précédentes, où, avant liaison avec la couche de couverture, la couche décorative est revêtue d'un voile non tissé sur sa face arrière.

14. Procédé selon l'une des revendications précédentes, où la couche décorative est partiellement gravée au laser avant la réalisation du composite de la couche décorative et de la couche de couverture.
